(19) Europäisches Patentamt / European Patent Office / Office européen des brevets

(11) **EP 3 586 302 B1**

(12) **FASCICULE DE BREVET EUROPEEN**

(45) Date de publication et mention de la délivrance du brevet:
**20.11.2024   Bulletin 2024/47**

(21) Numéro de dépôt: **18707893.6**

(22) Date de dépôt: **23.02.2018**

(51) Classification Internationale des Brevets (IPC):
**G06Q 10/063** $^{(2023.01)}$     **G06Q 50/40** $^{(2024.01)}$

(52) Classification Coopérative des Brevets (CPC):
**G06Q 50/40; G06Q 10/063**

(86) Numéro de dépôt international:
**PCT/EP2018/054556**

(87) Numéro de publication internationale:
**WO 2018/154068 (30.08.2018 Gazette 2018/35)**

(54) **PROCÉDÉ D'ESTIMATION D'AU MOINS UN INDICATEUR CARACTÉRISANT LE FONCTIONNEMENT D'UN RÉSEAU DE TRANSPORT DE PASSAGERS ET PROCÉDÉ DE MODIFICATION D'AU MOINS UN PARAMÈTRE DE FONCTIONNEMENT DE RÉSEAU DE TRANSPORT ASSOCIÉ**

VERFAHREN ZUR SCHÄTZUNG VON WENIGSTENS EINEM INDIKATOR ZUR CHARAKTERISIERUNG DES BETRIEBS EINES PERSONENTRANSPORTNETZES UND VERFAHREN ZUM ÄNDERN VON WENIGSTENS EINEM BETRIEBSPARAMETER DES ZUGEORDNETEN TRANSPORTNETZES

METHOD FOR ESTIMATING AT LEAST ONE INDICATOR CHARACTERIZING THE OPERATION OF A PASSENGER TRANSPORT NETWORK AND METHOD OF MODIFYING AT LEAST ONE OPERATING PARAMETER OF THE ASSOCIATED TRANSPORT NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.02.2017   FR 1700181**

(43) Date de publication de la demande:
**01.01.2020   Bulletin 2020/01**

(73) Titulaire: **Revenue Collection Systems France SAS**
**91220  Plessis-Pâté (FR)**

(72) Inventeur: **BIETTE, Grégoire**
**92230 Gennevilliers (FR)**

(74) Mandataire: **Lavoix**
**2, place d'Estienne d'Orves**
**75441 Paris Cedex 09 (FR)**

(56) Documents cités:
**EP-A1- 3 079 120        WO-A1-2016/084197**
**US-A1- 2015 115 028**

• **DASZCZUK WIKTOR BOHDAN ET AL: "Empty vehicles management as a method for reducing passenger waiting time in Personal Rapid Transit networks", IET INTELLIGENT TRANSPORT SYS, THE INSTITUTION OF ENGINEERING AND TECHNOLOGY, MICHAEL FARADAY HOUSE, SIX HILLS WAY, STEVENAGE, HERTS. SG1 2AY, UK, vol. 9, no. 3, 1 April 2015 (2015-04-01), pages 231 - 239, XP006051555, ISSN: 1751-956X, DOI: 10.1049/IET-ITS.2013.0084**

**Description**

La présente invention concerne un procédé de modification d'au moins un paramètre de fonctionnement de réseau de transport, et un réseau de transport, ainsi qu'un programme d'ordinateur associés.

L'invention se situe dans le domaine du transport de passagers, en particulier du transport urbain, dans le contexte d'un réseau ferroviaire de type métro urbain.

Un tel réseau de transport de passagers est caractérisé par un ensemble de stations et un ensemble de lignes, une ligne étant définie par l'ensemble de stations desservies par un véhicule.

De plus, un tel réseau de transport comporte un ensemble de plateformes de chargement et/ou de déchargement des passagers, par exemple des quais de métro.

Un tel réseau a une topologie qui lui est propre, certaines stations comportant plusieurs telles plateformes et étant desservies par plusieurs lignes du réseau.

Dans les réseaux de transport modernes, par exemple dans un réseau de métro, chaque station est équipée de portiques, et chaque usager est muni d'une carte permettant d'accéder au réseau et ayant un identifiant unique associé, au moins entre son entrée sur le réseau et sa sortie. Les portiques sont équipés de capteurs adaptés à lire les données de la carte, qui est par exemple munie d'une puce et de moyens de communication de données. Ainsi, le réseau de transport est équipé d'un système permettant d'enregistrer, en lien avec un identifiant, une heure d'entrée sur le réseau et une station d'entrée associée, ainsi qu'une heure de sortie et une station de sortie associée.

En fonctionnement, le réseau de transport ayant une topologie donnée a des paramètres de fonctionnement, comprenant notamment la fréquence de circulation des véhicules sur chaque ligne, qui varie en général en fonction de plages horaires, le type de véhicule utilisé, le taux de charge.

Dans le contexte des réseaux de transport de passagers de ce type, il est utile pour l'exploitant du réseau de connaître divers indicateurs caractérisant le fonctionnement du réseau, notamment le temps d'attente moyen pour au moins une plateforme du réseau, à diverses périodes (heures de la journée, jours de la semaine), ou une charge moyenne en nombre de passagers en attente sur une plateforme du réseau durant ces mêmes périodes, ou la charge moyenne des véhicules de transport de passagers.

L'estimation des indicateurs de fonctionnement d'un réseau de transport qui est un système technique complexe permet ensuite d'améliorer le fonctionnement du réseau de transport en modifiant un ou plusieurs paramètres de fonctionnement.

Pour estimer des tels indicateurs de fonctionnement d'un réseau de transport, on connaît une méthode classique de sondage, c'est-à-dire de comptage manuel des passagers par des personnes auxquelles on confie cette tâche ponctuelle. Ce travail est effectué ponctuellement dans un sous-ensemble de stations, et fournit des résultats échantillonnés qui ont une fiabilité limitée.

D'autre part, on connaît également des solutions basées sur la théorie des graphes qui impliquent une modélisation du réseau de transport. Ce sont des méthodes complexes, qui nécessitent des temps de calculs longs.

Il existe un besoin d'automatiser et d'optimiser, notamment en temps de calcul, le calcul des indicateurs caractérisant le fonctionnement des réseaux de transport.

A cet effet, l'invention propose un procédé de modification d'au moins un paramètre de fonctionnement d'un réseau de transport de passagers selon la revendication 1.

Avantageusement, le procédé de l'invention met en oeuvre un algorithme itératif sur un ensemble de trajets choisis et à partir de données d'entrées/sorties enregistrées, ce qui permet d'optimiser le temps de calcul.

Le procédé de modification d'au moins un paramètre de fonctionnement d'un réseau de transport de passagers selon l'invention peut également présenter une ou plusieurs des caractéristiques des revendications dépendantes 2 à 5.

Selon un autre aspect, l'invention concerne un support d'enregistrement d'informations, sur lequel sont mémorisées des instructions logicielles pour l'exécution d'un procédé de modification d'au moins un paramètre de fonctionnement d'un réseau de transport de passagers tel que brièvement décrit ci-dessus, lorsque ces instructions sont exécutées par un dispositif programmable.

Selon un autre aspect, l'invention concerne un programme d'ordinateur comportant des instructions logicielles qui, lorsqu'elles sont mises en oeuvre par un dispositif programmable, mettent en oeuvre un procédé de modification d'au moins un paramètre de fonctionnement d'un réseau de transport de passagers tel que brièvement décrit ci-dessus.

Selon un autre aspect, l'invention concerne un réseau de transport de passagers comportant un ensemble de stations selon la revendication 6.

D'autres caractéristiques et avantages de l'invention ressortiront de la description qui en est donnée ci-dessous, à titre indicatif et nullement limitatif, en référence aux figures annexées, parmi lesquelles :

- la figure 1 est un schéma représentant les blocs fonctionnels d'un dispositif programmable apte à mettre en oeuvre l'invention ;
- la figure 2 est un schéma illustrant une partie d'un réseau de transport dans lequel l'invention est applicable ;

- la figure 3 est un organigramme des principales étapes d'un procédé d'estimation d'au moins un indicateur caractérisant le fonctionnement d'un réseau de transport
- la figure 4 est un organigramme de la détermination d'un indicateur caractérisant le fonctionnement d'un réseau de transport ;

la figure 5 est un organigramme des principales étapes d'un procédé de modification d'au moins un paramètre de fonctionnement d'un réseau de transport selon un mode de réalisation.

Le procédé d'estimation d'au moins un indicateur caractérisant le fonctionnement d'un réseau de transport de l'invention est mis en oeuvre par un dispositif programmable, ou un ensemble de dispositifs programmables, tels des stations de travail, interconnectés pour distribuer et optimiser les calculs.

Le procédé de modification d'au moins un paramètre de fonctionnement d'un réseau de transport selon l'invention est mis en oeuvre dans un réseau de transport tel que décrit ci-dessous.

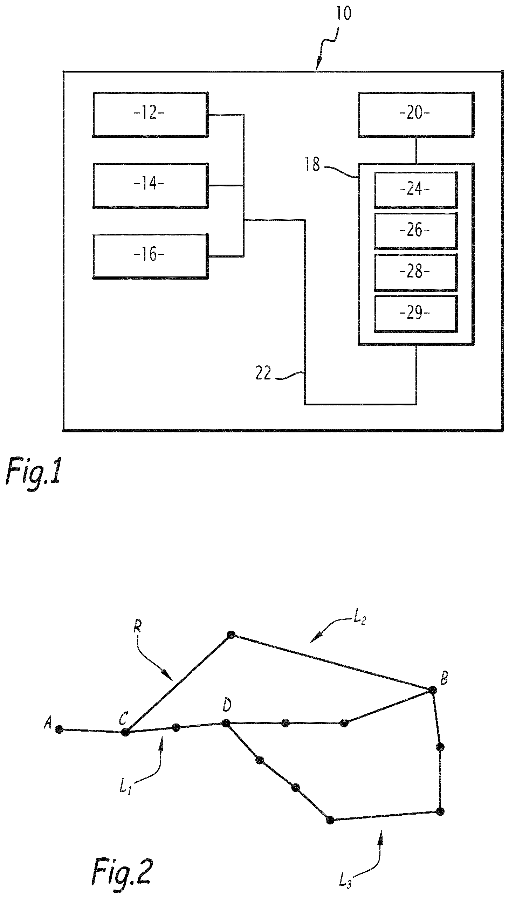

La figure 1 illustre les principaux blocs d'un mode de réalisation d'un dispositif apte à mettre en oeuvre le procédé d'estimation d'au moins un indicateur caractérisant le fonctionnement d'un réseau de transport de passagers selon l'invention, et de commander une modification d'un paramètre de fonctionnement d'un réseau de transport.

Un dispositif programmable 10 apte à mettre en oeuvre l'invention, typiquement un ordinateur, comprend un écran 12, un moyen 14 de saisie des commandes d'un opérateur, par exemple un clavier, optionnellement un moyen supplémentaire de pointage 16, tel une souris, permettant de sélectionner des éléments graphiques affichés sur l'écran 12, une unité centrale de calcul 18, ou CPU, comportant au moins un processeur, apte à exécuter des instructions de programme informatique lorsque le dispositif 10 est mis sous tension.

Le dispositif 10 comporte également une unité ou plusieurs unités de stockage d'informations 20, par exemple des registres, apte à stocker des données et des instructions de code exécutable permettant la mise en oeuvre de programmes comportant des instructions de code aptes à mettre en oeuvre le procédé selon l'invention. En particulier, des informations statiques relatives à la structure du réseau de transport sont mémorisées dans l'unité de stockage 20.

Les divers blocs fonctionnels du dispositif 10 décrits ci-dessus sont connectés via un bus de communication 22.

Dans un mode de réalisation, l'unité centrale de calcul 18 est apte à mettre en oeuvre :

- un module 24 de calcul et d'enregistrement des trajets choisis entre chaque couple de stations du réseau,
- un module 26 d'obtention d'une pluralité de données d'entrée/sortie du réseau de transport pendant une période d'observation,
- un module 28 de détermination d'un indicateur caractérisant le fonctionnement du réseau par mise en fonction des trajets choisis et de l'ensemble des données d'entrée/sortie, et
- un module 29 de commande de modification d'au moins un paramètre de fonctionnement du réseau de transport en fonction de la comparaison de l'indicateur estimé par rapport à au moins un seuil.

Ces modules 24, 26, 28, 29 sont réalisés sous forme d'instructions de programme d'ordinateur, exécutables par le dispositif programmable. En alternative, ils sont réalisés par des composants logiques programmables, ou encore sous forme de circuits intégrés (ou ASIC) dédiés.

Des détails de mise en oeuvre des divers modules mis en oeuvre par un dispositif programmable apte à mettre en oeuvre l'invention sont donnés ci-après.

Un réseau de transport de passagers, par exemple un réseau de métro urbain, comporte un ensemble de stations et un ensemble de lignes, une ligne étant définie par l'ensemble de stations desservies par un véhicule de transport et un sens de parcours.

La figure 2, décrite plus en détail ci-après, illustre une partie d'un réseau de transport R comprenant des lignes $L_1$, $L_2$ et $L_3$.

De plus, un tel réseau de transport comporte un ensemble de plateformes de chargement et/ou de déchargement des passagers, par exemple des quais de métro ou des arrêts de bus.

Un tel réseau a une topologie qui lui est propre, les stations comportant en général plusieurs telles plateformes, certaines stations étant desservies par plusieurs lignes du réseau.

Dans les réseaux de transport modernes, par exemple dans un réseau de métro, chaque station est équipée de portiques automatiques, et chaque usager est muni d'une carte permettant d'accéder au réseau et ayant un identifiant unique associé, au moins entre son entrée sur le réseau et sa sortie. Les portiques automatiques sont équipés de capteurs adaptés à lire les données de la carte, qui est par exemple munie d'une puce et de moyens de communication de données.

Ainsi, le réseau de transport est équipé d'un système permettant d'enregistrer, en lien avec un identifiant, une heure d'entrée sur le réseau et une station d'entrée associée, ainsi qu'une heure de sortie du réseau et une station de sortie associée.

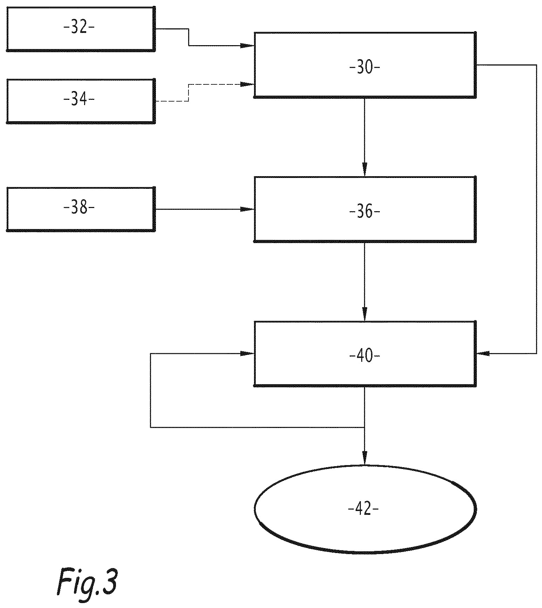

La figure 3 est un organigramme des principales étapes d'un procédé d'estimation d'au moins un indicateur caractérisant le fonctionnement d'un réseau de passagers.

En entrée d'une première étape 30 de calcul et enregistrement de trajets choisis dans le réseau on utilise un ensemble 32 d'informations statiques caractérisant le réseau : l'ensemble de stations du réseau, l'ensemble des plateformes, l'ensemble des lignes, ainsi que les horaires de fonctionnement, et les temps moyens de parcours en l'absence d'incident.

Le fonctionnement du réseau, pour une période temporelle donnée, est caractérisé par la fréquence des véhicules pour chaque ligne, et par la taille ou capacité des véhicules mis en circulation. La fluidité du trafic et l'éventuelle congestion du réseau sont dépendants à la fois de conditions matérielles de fonctionnement que du flux d'usagers.

Chaque ligne de transport est définie par un ensemble d'arrêts, et par un sens de parcours entre les deux stations d'extrémité appelées terminus. Chaque arrêt appartient à une station et a une plateforme de chargement/déchargement associée, en fonction du sens de parcours de la ligne.

Pour chaque ligne, le temps moyen de parcours entre deux arrêts en l'absence d'incident est connu, ainsi que le temps moyen d'arrêt à chaque plateforme.

Une même plateforme de chargement/déchargement peut éventuellement être associée à plusieurs lignes.

Les informations 32 préalablement enregistrées comportent aussi des informations de correspondance, ainsi que des informations de temps moyen de transfert, par exemple pour un passager marchant à une vitesse moyenne donnée, pour changer de plateforme, à l'intérieur d'une même station ou entre stations connectées par des passages prévus, afin d'effectuer une correspondance entre deux lignes du réseau.

De plus, on utilise optionnellement un ensemble 34 de règles supplémentaires correspondant à des conseils d'utilisation du réseau de transport fournis par l'opérateur du réseau aux passagers. Il s'agit par exemple des préférences de correspondance entre lignes ou de trajet indiquées aux passagers, par exemple « pour atteindre une station de destination B à partir d'une station de départ A, il est préférable d'emprunter la ligne L et changer à la station C ».

Ces informations préalables 32, 34 sont fournies en entrée de l'étape 30 de calcul des trajets choisis entre tous les couples distincts de stations du réseau.

Il s'agit ici de calculer et mémoriser, pour chaque couple (A,B) de stations du réseau, un ou plusieurs trajets choisis parmi l'ensemble des trajets théoriquement possibles.

Un trajet entre une station de départ A et une station d'arrivée B est défini par un ensemble de lignes et de correspondances permettant de relier A et B.

Un trajet choisi est défini comme un trajet qui est localement optimal, en particulier il ne comporte pas de boucle. L'ensemble des trajets choisis est déterminé de manière à être représentatif des choix possibles pour l'usager,

A titre d'exemple schématique non exhaustif, la figure 2 illustre deux stations A et B, dans un réseau de transport R représenté partiellement. Les stations du réseau sont représentées par des noeuds, et les plateformes ne sont pas représentées. Ainsi, la correspondance entre lignes impliquant un changement de plateforme n'est pas représentée sur la figure 2.

La ligne $L_1$ relie les stations A et B en six arrêts selon un premier trajet.

Il existe une première possibilité de correspondance avec la ligne $L_2$, à partir de la station C. Le trajet effectué à partir de la station A, sur la ligne $L_1$ puis sur la ligne $L_2$ à partir de la station C de correspondance est un deuxième trajet entre A et B et comporte 3 arrêts.

Il existe également une possibilité de correspondance avec la ligne $L_3$, à partir de la station D, le troisième trajet entre A et B totalisant dans ce cas 9 arrêts. On distingue a priori 3 trajets possibles différents entre les stations A et B. On suppose qu'en l'absence d'incidents le premier trajet et le deuxième trajet ont des durées similaires, et le troisième trajet est deux fois plus long.

L'étape 30 met en oeuvre un procédé itératif, de type « arbre », décrit ci-dessous.

Ce procédé est appliqué sur un graphe comprenant des noeuds qui sont les stations du réseau de transport, reliés par des arcs en fonction des lignes de ce réseau. Les chemins choisis correspondent à des trajets dans le réseau. Pour chaque couple (A,B) de station ou noeuds du graphe, on calcule le plus court chemin en appliquant un algorithme quelconque de recherche de plus court chemin dans un graphe, par exemple l'algorithme A*, bien connu dans le domaine de la théorie des graphes.

Ensuite, sur le trajet défini par le plus court chemin, pour chaque « choix » pour effectuer ce chemin (ligne et direction de départ, prise ou non d'une correspondance possible), on crée un graphe, dit enfant, qui est une copie du graphe originel auquel est retirée l'arête correspondant au choix fait. On répète cette étape sur chacun des graphes enfants (et ainsi de suite) jusqu'à un certain critère d'arrêt.

Par exemple un critère d'arrêt sur le temps théorique de parcours par rapport au temps de parcours théorique du plus court chemin du graphe originel.

Par exemple, en reprenant le réseau de la figure 2, on applique l'algorithme de recherche de plus court chemin entre A et B sur le graphe complet. Il s'agit dans cet exemple du trajet A C D B passant par $L_1$. Pour chaque choix sur ce parcours, on crée un graphe enfant où ce choix est retiré.

- Graphe enfant 0 : l'arrête A-C (correspondant au choix de partir dans cette direction) est retirée. Il sera désormais impossible d'aller de A à B, cette branche de l'arbre s'arrête.
- Graphe enfant 1 : l'arrête C vers D en passant par $L_1$ est retirée (correspondant au choix de prendre $L_1$ et non $L_2$). Le chemin le plus court sur ce graphe sera A C B en passant par $L_2$ entre C et B. (puis s'arrêtera rapidement son seul graphe enfant étant l'arrête AC retirée)
- Graphe enfant 2 : l'arrête D vers B en passant par $L_1$ est retirée (correspondant au choix de prendre $L_1$ et non $L_3$). Le chemin le plus court sera alors soit ACB en passant par $L_2$, soit ACDB en passant par $L_3$. Mais dans tous les deux cas le trajet ACDB passant par $L_3$ sera découvert soit directement, soit par un graphe enfant de ce graphe enfant 2.

Parmi l'ensemble de chemins retenus, les chemins identiques sont éliminés.

Ainsi, à la sortie de l'étape 30 on mémorise, pour chaque couple (A, B) de stations, un nombre supérieur ou égal à 1 de trajets choisis, variable par couple de stations (A,B) et fourni automatiquement par l'algorithme mis en oeuvre lors de cette étape 30. Le détail de chacun des trajets choisis pour un couple (A, B) de stations est mémorisé.

Par exemple, de retour au scénario de la figure 2, selon un mode de réalisation, les trois trajets déterminés, ACDB par la ligne $L_1$, ACB par les lignes $L_1$ puis $L_2$ et ACDB par $L_1$, puis $L_3$ sont tous mémorisés comme trajets choisis.

Selon une variante, les trajets choisis sont calculés sur plusieurs plages horaires, et mémorisés en association avec la plage horaire, par exemple une plage horaire de jour et une plage horaire de nuit, ces plages horaires ayant un impact effectif sur la topologie du réseau, notamment du fait du nombre de lignes en fonctionnement.

Les résultats mémorisés sont relatifs à la topologie du réseau de transport et aux informations statiques 32 et 34 fournies en entrée. Ils sont recalculés par exemple en cas de changement dans la topologie du réseau.

En variante ou en complément, le calcul des trajets choisis et mémorisés est ré-effectué suite à des changements dans le fonctionnement du réseau affectant la topologie du réseau.

Les trajets choisis pour chaque couple (A,B) de stations sont donc mémorisés, pour une période temporelle de validité donnée, dans une mémoire 20 du dispositif programmable mettant en oeuvre l'invention.

Par ailleurs, des données d'entrée/sortie du réseau 38 sont enregistrées sur une période d'observation $\Delta T_{obs}$ donnée, de préférence au moins égale à 24 heures, mais pouvant être égale à plusieurs jours, une semaine, un mois ou plus.

Les données d'entrée/sortie 38 sont enregistrées systématiquement dans le réseau de transport, en association avec un identifiant Id, par exemple un identifiant d'abonnement de passager.

Une donnée d'entrée comporte une station d'entrée sur le réseau, par exemple une station A, ainsi qu'une date et heure d'entrée dans la station, notée $T_A$, en relation avec un identifiant Id.

Une donnée de sortie comporte une station de sortie du réseau, par exemple une station B, ainsi qu'une date et heure de sortie de la station B, notée $T_B$, en relation avec un identifiant Id.

Lors de l'étape 36 d'obtention de données d'entrée/sorte relatives aux trajets effectués sur le réseau de transport pendant la période d'observation $\Delta T_{obs}$, on obtient toutes les données d'entrée/sortie enregistrées et on les trie par trajets.

En effet, si les identifiants Id sont des identifiants d'abonnement passager, un passager peut effectuer de nombreux trajets pendant une période d'observation $\Delta T_{obs}$ donnée. Il s'agit donc de trier les données, en fonction des dates $T_A$ et $T_B$ et des stations d'entrées/sorties enregistrées pour obtenir un ensemble de données d'entrée/sorte relatives à des trajets effectifs.

Un trajet effectif correspond au déplacement d'un même passager entre une station de départ A et une station d'arrivée B.

Ensuite on met en oeuvre une étape 40 de calcul, par mise en oeuvre d'un algorithme itératif, d'un ou plusieurs indicateurs 42 caractérisant le fonctionnement du réseau pendant au moins une partie de la période d'observation $\Delta T_{obs}$.

L'étape 40 comprend la détermination, pour chaque ensemble de données d'entrée/sortie correspondant à un trajet effectif, déterminé à l'étape 36, d'un trajet correspondant parmi les trajets choisis. Ainsi, l'étape 40 comprend l'estimation des trajets effectués dans le réseau pendant la période d'observation.

L'indicateur 42 est par exemple égal à un temps d'attente moyen pour chaque plateforme du réseau, par périodes temporelles élémentaires $dt_e$, de durée donnée par exemple égale à un quart d'heure. En variante, il est possible de calculer le temps d'attente moyen sur d'autres périodes temporelles choisies, en effectuant des statistiques à partir des résultats obtenus par périodes élémentaires.

Les périodes élémentaires doivent être largement supérieures à l'intervalle moyen des véhicules pendant les horaires d'intérêt. Par exemple, on choisit une période élémentaire d'un quart d'heure quand l'intervalle des métros pendant les heures de pointe est de 2 minutes.

En variante, ou en complément, l'indicateur 42 est égal à la charge moyenne, en nombre de passagers, par plateforme et par période temporelle élémentaire $dt_e$.

En effet, à partir des données d'entrées/sorties 36 préalablement enregistrées, et après calcul du temps d'attente moyen pour chaque plateforme du réseau, on peut calculer le nombre moyen de passagers en attente sur la même période temporelle élémentaire.

En variante ou en complément, de manière analogue, on peut également estimer la charge moyenne, en nombre de passagers, par véhicule de transport pendant ces périodes temporelles élémentaires.

En variante ou en complément, on peut estimer le taux de sélection des trajets parmi les possibilités du réseau. Ainsi, lorsque plusieurs trajets sont possibles entre une station d'entrée A et une station de sortie B, il est possible de calculer, pendant chaque période temporelle élémentaire $dt_e$, quel est le taux de sélection effectif de chacune des variantes possibles.

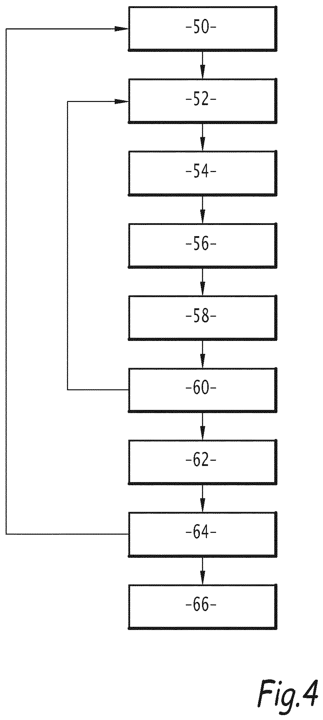

La figure 4 est un synoptique des principales étapes mises en oeuvre dans l'étape 40 de calcul d'un indicateur caractérisant le réseau de transport.

Dans ce mode de réalisation, l'indicateur calculé est le temps d'attente moyen par plateforme de chargement déchargement.

Dans une première étape 50, les temps d'attente $A(Q_k, dt_e)$ par période temporelle élémentaire $dt_e$ à chaque plateforme $Q_k$ du réseau sont mis à jour.

Dans ce mode de réalisation, une période élémentaire $dt_e$ est une tranche temporelle définie par une durée, ainsi qu'une date de début et de fin, par exemple le 20 février 2017 de 8h à 8h15.

A l'initialisation, les temps d'attente sont tous initialisés à une valeur donnée, qui est soit fixe, soit calculée en fonction des informations connues du réseau, par exemple des horaires des lignes.

Selon un mode de réalisation, les temps d'attente sont calculés en fonction de résultats précédents, par exemple sur le mois précédent. Par exemple, on a déjà calculé les temps d'attente pour janvier, et on souhaite les calculer désormais pour février. On initialisera les temps d'attente à la moyenne de janvier sur chaque période élémentaire.

Lorsque l'algorithme est itéré, les temps d'attente à l'itération courante sont mis à jour avec les valeurs de temps d'attente estimées à l'itération précédente.

Ensuite, pour chaque trajet effectif $TR(A, T_A, B, T_B)$, défini par les stations d'entrée A et de sortie B, et les heures respectives d'entrée $T_A$ et de sortie $T_B$, enregistré pendant la période d'observation, on calcule à l'étape 52 la durée effective $D(TR)=T_B-T_A$.

Connaissant les stations d'entrée A et de sortie B, on extrait à l'étape 54 de la mémoire l'ensemble de trajets choisis entre A et B préalablement calculés, notés ici $TR_1(A,B)$, $TR_2(A,B)$...$TR_n(A,B)$.

Chaque trajet choisi $TR_j(A,B)$ peut comprendre une ou plusieurs correspondances entre lignes.

A l'étape 56 de calcul de durée de trajet estimée, on calcule, pour chaque trajet choisi $TR_j(A,B)$, en partant de A, en utilisant les données statiques pré-enregistrées 32 et en prenant en considération le temps d'attente mis à jour à l'étape 50 à chaque plateforme en cas de correspondance.

Dans un mode de réalisation, l'ensemble des plateformes de correspondance inclut la plateforme de chargement/déchargement de la station d'entrée du trajet.

On obtient une durée de trajet estimé $D_j(TR_j(A,B))$.

Ensuite, on sélectionne à l'étape de sélection 58 le trajet choisi $TR_k$ qui est le plus proche, selon un critère donné, du trajet effectif.

Par exemple, le trajet choisi $TR_k$ est celui dont la durée $D_k(TR_k(A,B))$ est la plus proche , en valeur absolue, de la durée effective $D(TR)$.

$$k = Arg\min_j \left( \left| D(TR) - D_j(TR_j) \right| \right) \qquad \text{(EQ1)}$$

En cas de durée de trajet estimée égale entre deux ou plusieurs trajets, on sélectionne par exemple le trajet comportant le moins de correspondances.

La différence temporelle entre la durée effective $D(TR)$ et la durée estimée $Dk(TRk(A,B))$ du trajet sélectionné est distribuée à l'étape 60 entre les temps d'attente associés aux plateformes de correspondance du trajet $TR_k(A,B)$ sélectionné à l'étape de sélection 58.

Par exemple, si le trajet $TR_k(A,B)$ comprend une seule correspondance effectuée sur une plateforme $Q_m$, on mémorise en association avec $Q_m$ et la période élémentaire $dt_e$ une erreur égale à :

$$dk = D(TR) - D_k(TR_k) \qquad \text{(EQ2)}$$

Si le trajet $TR_k(A,B)$ comprend deux correspondances effectuées respectivement sur une plateforme $Q_m$ et sur une plateforme $O_s$, on mémorise dk/2 en association avec $Q_m$ et dk/2 en association avec $Q_s$.

En généralisant, s'il y a p correspondances, on mémorise $\dfrac{1}{p} \times dk$ en association avec chaque plateforme de correspondance.

En variante, on peut appliquer un coefficient de pondération $a_m$ différent de 1/p à chaque plateforme de correspondance $Q_m$, si :

$$\sum_{m=1}^{p} a_m = 1 \qquad\qquad (EQ3)$$

Ainsi, à l'étape 60 on affecte une fraction, égale à $a_m$ ou à 1/p, de la différence temporelle *dk* à chaque plateforme de correspondance $Q_m$, en lien avec la période élémentaire $dt_e$, de manière à affiner l'estimation du temps d'attente sur la plateforme $Q_m$ pendant la période élémentaire $dt_e$.

Les étapes 52 à 60 sont effectuées pour tous les trajets effectifs enregistrés définis par les stations d'entrée A et de sortie B, et les heures respectives d'entrée $T_A$ et de sortie $T_B$.

Ensuite, à l'étape 62 on effectue une agrégation des erreurs mémorisées et une ré-évaluation des temps d'attente par plateforme, suivie d'une mémorisation des temps d'attente ré-évalués.

De préférence, on met en oeuvre un algorithme de type « descente de gradient ».

Par exemple, on met en oeuvre :

$$A_{i+1}^{(Q_m, dt_e)} = A_i^{(Q_m, dt_e)} + \alpha_i \sum_{u \in \Omega} dk_u^{(Q_m, dt_e)} \qquad\qquad (EQ4)$$

$$\text{Avec } \alpha_{i+1} = a \times \alpha_i \text{ et } a < 1 \qquad\qquad (EQ5)$$

Où i est l'indice d'itération, $\alpha_i$ un facteur de pondération, a une constante et $A_i^{(Q_m, dt_e)}$ le temps d'attente calculé sur la plateforme de correspondance $Q_m$ durant $dt_e$.

A l'étape suivante 64 on vérifie si un critère de convergence est satisfait. Par exemple, on estime la différence entre les temps d'attente préalablement enregistrés et utilisés à l'étape 56 et les temps d'attente estimés à l'étape de ré-évaluation des temps d'attente 62, pour chaque plateforme et chaque période temporelle élémentaire.

L'algorithme s'arrête lorsque le critère de convergence est vérifié. Par exemple, ce critère de convergence est d'atteindre un premier pourcentage donné, par exemple 99%, des couples ($Q_m$, $dt_e$) pour lesquels l'évolution des temps d'attente entre deux itérations est inférieure à un deuxième pourcentage donné, par exemple 1%.

Si le critère de convergence est validé, le procédé prend fin.

Si le critère de convergence n'est pas validé, le procédé est itéré. L'étape 64 est suivie de l'étape 50 à laquelle les temps d'attente par plateforme courants sont mis à jour avec les temps d'attente ré-évalués et mémorisés à l'étape de ré-évaluation 62.

Les étapes 52 à 64 sont alors itérées jusqu'à ce que le critère de convergence soit validé à l'étape 64.

Après validation du critère de convergence, une étape 66 de calcul d'indicateur caractérisant le réseau de transport est mise en oeuvre.

Le calcul 66 utilise les données mémorisées durant la mise en oeuvre du procédé itératif, qui sont les temps d'attente mis à jour et mémorisés et/ou les trajets sélectionnés comme trajets effectifs.

Avantageusement, le procédé de l'invention est rapide, le nombre de trajets choisis pour chaque couple de stations étant limité, et l'estimation d'une durée de trajet par trajet choisi étant rapide.

Egalement, le procédé de l'invention permet d'évaluer ces indicateurs caractérisant le fonctionnement du réseau pour toute période temporelle et pour tout élément du réseau.

Enfin le procédé est dirigé par la réalité des temps de parcours et non pas dirigé par un modèle préétabli, différent pour chaque réseau de transport étudié.

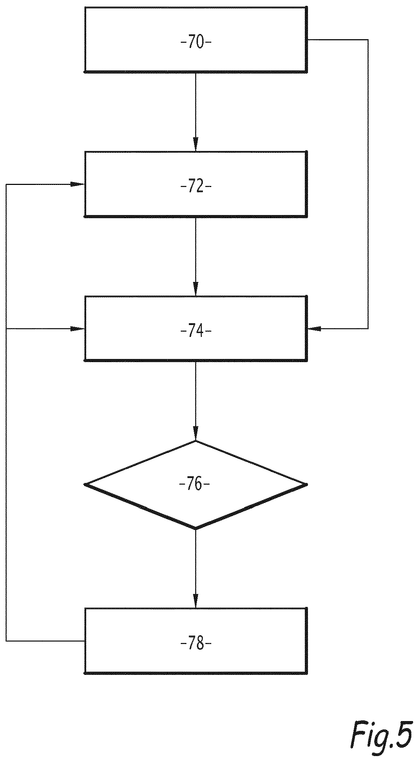

La figure 5 est un organigramme des principales étapes d'un procédé de modification d'au moins un paramètre de fonctionnement d'un réseau de passagers selon un mode de réalisation de l'invention.

Le procédé comprend une première étape 70 de mise en oeuvre d'un procédé d'estimation d'indicateur de fonctionnement du réseau de transport tel que décrit ci-dessus.

L'estimation est par exemple basée sur des données d'entrée/sortie recueillies la veille, ou bien dans la semaine qui précède, permettant de contrôler finement le dimensionnement du réseau en fonction d'indicateurs de fonctionnement.

On obtient à l'issue de cette étape, pour une pluralité de périodes temporelles, un premier indicateur qui est un temps d'attente moyen par plateforme de chargement/déchargement, et, optionnellement, un deuxième indicateur de charge de chaque plateforme.

Ensuite, pour chaque période temporelle considérée (étape 72), et pour chaque plateforme du réseau (étape 74), le temps d'attente moyen estimé est comparé à l'étape 76 à un seuil prédéterminé. Ce seuil peut être fixe et constant pour toutes les plateformes, ou être dépendant de la plateforme et/ou de la période temporelle considérée. Les seuils à utiliser sont préalablement mémorisés.

Si le temps d'attente moyen dépasse le seuil à l'étape 76, cette étape est suivie d'une étape 78 de commande de modification d'un paramètre de fonctionnement du réseau, ce paramètre étant par exemple la fréquence de circulation des véhicules de transport desservant ladite plateforme pendant la période temporelle considérée ou une période temporelle plus étendue englobant la période temporelle considérée. Ce paramètre peut être, en variante ou en complément, la capacité de charge des véhicules de transport desservant ladite plateforme pendant la période temporelle considérée. Par exemple, il est possible dans certains réseaux de transport de prévoir des véhicules de transport à deux étages au lieu de véhicules comprenant un seul étage, ou des bus articulés au lieu de bus simples, ce qui permet de doubler potentiellement la capacité de transport et assurer une diminution du temps d'attente moyen.

En variante ou en complément, il est possible de détourner le flux de passagers vers un itinéraire moins saturé.

Si le temps d'attente moyen est inférieur au seuil, l'étape 76 est suivie de l'étape 74 précédemment décrite, ou de l'étape 72 lorsque toutes les plateformes du réseau ont été traitées.

En variante, on utilise à l'étape 76 deux seuils, un premier seuil $S_{min}$ et un deuxième seuil $S_{max}$. Si le temps d'attente moyen est inférieur au premier seuil $S_{min}$, il en est déduit que le réseau est surdimensionné pour la période temporelle considérée. En conséquence, un paramètre de fonctionnement est modifié, par exemple la fréquence de circulation des véhicules de transport desservant ladite plateforme pendant la période temporelle considérée est diminuée et/ou la capacité de charge des véhicules de transport est diminuée.

Lorsque le temps d'attente moyen est supérieur au deuxième seuil $S_{max}$, un paramètre de fonctionnement du réseau est modifié comme expliqué ci-dessus en référence à l'étape 78.

Lorsque le temps d'attente moyen est compris entre les deux seuils $S_{min}$ et $S_{max}$, les paramètres de fonctionnement du réseau sont laissés inchangés.

Avantageusement, le procédé de modification peut être mis en oeuvre sur la base d'indicateurs estimés par exemple la veille, et donc d'adapter dynamiquement le réseau de transport par rapport à la charge de passagers qui peut être variable, par exemple en fonction de la saison ou d'évènements de durée variable.

Avantageusement, la collecte de données d'entrée /sortie est effectuée également suite à la modification d'un ou plusieurs paramètres de fonctionnement du réseau de transport, et le procédé d'estimation d'un indicateur est mis en oeuvre, afin d'obtenir des indicateurs de fonctionnement mis à jour après la modification des paramètres de fonctionnement du réseau. Cela permet de valider l'amélioration de fonctionnement du réseau.

**Revendications**

1. Procédé de modification d'au moins un paramètre de fonctionnement d'un réseau de transport de passagers, le réseau comportant un ensemble de stations, chaque station comportant au moins une plateforme de chargement et/ou déchargement de passagers dans un véhicule de transport du réseau, le réseau étant équipé d'un système permettant d'enregistrer, en association avec un identifiant, des données d'entrée/sortie du réseau, une donnée d'entrée/sortie consistant en une station d'entrée et une date et heure d'entrée associée, et une station de sortie et une date et heure de sortie associée, le système comprenant des portiques automatiques équipés de capteurs adaptés à lire des données d'une carte permettant à un usager d'accéder au réseau et ayant un identifiant unique associé, le procédé de modification étant mis en oeuvre par un dispositif programmable, et **caractérisé en ce qu'**il comprend une première étape de mise en oeuvre d'un procédé d'estimation d'au moins un indicateur caractérisant le fonctionnement dudit réseau, l'indicateur caractérisant le fonctionnement dudit réseau étant un temps d'attente moyen estimé par plateforme du réseau, le procédé de modification comportant en outre les étapes suivantes:

   pour chaque période temporelle élémentaire et pour chaque plateforme du réseau,
   comparaison du temps d'attente moyen estimé pour la plateforme donnée à un premier seuil prédéterminé et à un deuxième seuil prédéterminé, et lorsque le temps d'attente moyen estimé pour ladite plateforme donnée est inférieur au premier seuil prédéterminé ou supérieur au deuxième seuil prédéterminé, commande de modification (78) d'un paramètre de fonctionnement du réseau de transport parmi une fréquence de circulation ou une capacité de charge des véhicules de transport desservant ladite plateforme, le procédé d'estimation d'au moins un indicateur caractérisant le fonctionnement dudit réseau comprenant :

- une étape (30) préalable de calcul et d'enregistrement, pour chaque couple de stations du réseau, d'au moins un trajet choisi entre les deux stations du couple de stations, en fonction de données statiques (32) caractérisant ledit réseau de transport ;

et des étapes de :

- obtention (36), à partir de données d'entrée/sortie enregistrées par ledit système du réseau de transport de passagers, de données d'entrée/sortie de trajets effectifs correspondant à des trajets effectifs dans le réseau pendant une période d'observation, comprenant une station d'entrée et une date et heure d'entrée associée, et une station de sortie et une date et heure de sortie associée ;
- pour chaque donnée d'entrée/sortie, calcul (52) d'une durée effective de trajet et sélection (58) d'un trajet entre station d'entrée et station de sortie parmi les trajets choisis en association avec le couple de stations formé par ladite station d'entrée et ladite station de sortie ;
- calcul (40) d'au moins un indicateur caractérisant le fonctionnement du réseau, comprenant le calcul d'un temps d'attente moyen pour chaque plateforme du réseau durant une ou plusieurs périodes temporelles élémentaires par mise en oeuvre d'un algorithme itératif mettant en oeuvre, à chaque itération :

- pour chaque donnée d'entrée/sortie, un calcul (60) d'une différence temporelle entre une durée estimée du trajet sélectionné et la durée effective du trajet ;
- lorsque le trajet sélectionné comprend au moins une correspondance via une plateforme de chargement/déchargement, affectation (60) d'une fraction de ladite différence temporelle à chaque temps d'attente associé à une plateforme de correspondance,
- une mise à jour (62) du temps d'attente par période temporelle élémentaire pour chaque plateforme du réseau,

le procédé d'estimation d'au moins un indicateur caractérisant le fonctionnement dudit réseau comprenant en outre, à chaque itération, pour chaque donnée d'entrée/sortie de trajet effectif, un calcul (56) de la durée estimée de trajet pour chaque trajet choisi associé au couple de stations formé par ladite station d'entrée et ladite station de sortie en fonction desdits temps d'attente mis à jour et des données statiques caractérisant ledit réseau de transport, et une re-sélection (58), parmi lesdits trajets choisis, du trajet ayant la durée estimée de trajet la plus proche de la durée effective de trajet.

2. Procédé selon la revendication 1, dans lequel ladite fraction de la différence temporelle est fonction d'un coefficient de pondération associé à chaque plateforme de chargement/déchargement.

3. Procédé selon l'une quelconque des revendications 1 ou 2, dans lequel l'étape (30) préalable de calcul, pour chaque couple de stations du réseau, d'au moins un trajet choisi entre les deux stations du couple de stations, met en oeuvre un algorithme de recherche de chemin le plus court dans un graphe.

4. Procédé selon l'une quelconque des revendications 1 à 3, dans lequel lesdites données statiques caractérisant ledit réseau de transport comprennent l'ensemble de stations du réseau, l'ensemble des plateformes, l'ensemble des lignes, ainsi que les horaires de fonctionnement, et des temps moyens de parcours en l'absence d'incident.

5. Procédé selon l'une quelconque des revendications 1 à 4, dans lequel le temps d'attente moyen pour chaque plateforme du réseau durant une ou plusieurs périodes temporelles élémentaires est un premier indicateur caractérisant le réseau de transport, et dans lequel l'étape de calcul (40) comporte le calcul d'au moins un deuxième indicateur caractérisant le fonctionnement du réseau de transport parmi : une charge moyenne en nombre de passagers en attente sur une plateforme du réseau durant une ou plusieurs périodes temporelles élémentaires ; une charge moyenne, en nombre de passagers, par véhicule de transport pendant une ou plusieurs périodes temporelles élémentaires ; un taux de sélection effective des trajets parmi les trajets choisis à l'étape préalable.

6. Réseau de transport de passagers comportant un ensemble de stations, chaque station comportant au moins une plateforme de chargement et/ou déchargement de passagers dans un véhicule de transport du réseau, le réseau étant équipé d'un système permettant d'enregistrer, en association avec un identifiant, des données d'entrée/sortie du réseau, une donnée d'entrée/sortie consistant en une station d'entrée et une date et heure d'entrée associée, et une station de sortie et une date et heure de sortie associée, le système comprenant des portiques automatiques équipés de capteurs adaptés à lire des données d'une carte permettant à un usager d'accéder au réseau et ayant un identifiant unique associé, **caractérisé en ce qu'**il comporte un dispositif d'estimation d'au moins un indicateur caractérisant le fonctionnement dudit réseau, l'indicateur caractérisant le fonctionnement dudit réseau étant un temps d'attente moyen estimé par plateforme du réseau,

et un module (29) adapté à commander, pour chaque période temporelle élémentaire pour laquelle le temps d'attente moyen estimé pour une plateforme donnée est inférieur à un premier seuil prédéterminé ou supérieur à un deuxième seuil prédéterminé, une modification d'un paramètre de fonctionnement du réseau de transport parmi une fréquence de circulation ou une capacité de charge des véhicules de transport desservant ladite plateforme,
le dispositif d'estimation d'au moins un indicateur caractérisant le fonctionnement dudit réseau de transport de passagers, étant un dispositif programmable comprenant un processeur configuré pour mettre en oeuvre:

- un module de calcul et d'enregistrement, pour chaque couple de stations du réseau, d'au moins un trajet choisi entre les deux stations du couple de stations, en fonction de données statiques (32) caractérisant ledit réseau de transport ;

et :

- un module d'obtention, à partir de données d'entrée/sortie enregistrées par ledit système du réseau de transport de passagers, de données d'entrée/sortie de trajets effectifs correspondant à des trajets effectifs dans le réseau pendant une période d'observation, comprenant une station d'entrée et une date et heure d'entrée associée, et une station de sortie et une date et heure de sortie associée ;
- un module de calcul adapté à :

    - pour chaque donnée d'entrée/sortie, calculer une durée effective de trajet et sélectionner un trajet entre station d'entrée et station de sortie parmi les trajets choisis en association avec le couple de stations formé par ladite station d'entrée et ladite station de sortie ;
    - calculer au moins un indicateur caractérisant le fonctionnement du réseau, comprenant le calcul d'un temps d'attente moyen pour chaque plateforme du réseau durant une ou plusieurs périodes temporelles élémentaires par mise en oeuvre d'un algorithme itératif mettant en oeuvre, à chaque itération :

        - pour chaque donnée d'entrée/sortie, un calcul d'une différence temporelle entre une durée estimée du trajet sélectionné et la durée effective du trajet ;
        - lorsque le trajet sélectionné comprend au moins une correspondance via une plateforme de chargement/déchargement, une affectation d'une fraction de ladite différence temporelle à chaque temps d'attente associé à une plateforme de correspondance,

    - une mise à jour du temps d'attente par période temporelle élémentaire pour chaque plateforme du réseau,
    - calculer, à chaque itération, pour chaque donnée d'entrée/sortie de trajet effectif, une durée estimée de trajet pour chaque trajet choisi associé au couple de stations formé par ladite station d'entrée et ladite station de sortie en fonction desdits temps d'attente mis à jour et des données statiques caractérisant ledit réseau de transport, et re-sélectionner, parmi lesdits trajets choisis, un trajet ayant la durée estimée de trajet la plus proche de la durée effective de trajet.

7. Programme d'ordinateur comportant des instructions logicielles qui, lorsqu'elles sont mises en oeuvre par un dispositif programmable, mettent en oeuvre un procédé de modification d'au moins un paramètre de fonctionnement d'un réseau de transport de passagers conforme aux revendications 1 à 5.

8. Support d'enregistrement d'informations, **caractérisé en ce qu'**il comporte des instructions logicielles pour l'exécution d'un procédé de modification d'au moins un paramètre de fonctionnement d'un réseau de transport de passagers conforme aux revendications 1 à 5, lorsque ces instructions sont exécutées par un dispositif programmable.

**Patentansprüche**

1. Verfahren zum Ändern mindestens eines Betriebsparameters eines Personentransportnetzes, wobei das Netz eine Reihe von Stationen umfasst, wobei jede Station mindestens eine Plattform zum Be- und/oder Entladen von Passagieren in ein Transportfahrzeug des Netzes umfasst, wobei das Netz mit einem System ausgestattet ist, das in Verbindung mit einer Kennung Ein-/Ausgangsdaten des Netzes aufzeichnet, wobei die Ein-/Ausgangsdaten aus einer Eingangsstation und einem zugehörigen Eingangsdatum und einer zugehörigen Eingangszeit sowie einer Ausgangsstation und einem zugehörigen Ausgangsdatum und einer zugehörigen Ausgangszeit bestehen, wobei das System automatische Portale umfasst, die mit Sensoren ausgestattet sind, die geeignet sind, Daten von einer Karte zu lesen, die einem Benutzer den Zugang zum Netz ermöglicht und eine zugehörige eindeutige Kennung hat,wobei das Änderungsverfahren von einer programmierbaren Vorrichtung durchgeführt wird und ist **dadurch gekennzeichnet, dass** es einen ersten Schritt umfasst, der die Durchführung eines Verfahrens zur Schätzung mindestens eines Indikators beinhaltet, der die Funktionsweise des genannten Netzes charakterisiert, wobei der Indikator, der die Funktionsweise des genannten Netzes charakterisiert, eine geschätzte durchschnittliche Wartezeit pro Plattform des Netzes ist, wobei das Änderungsverfahren außerdem die folgenden Schritte umfasst:

   für jede elementare Zeitperiode und für jede Plattform des Netzes, Vergleich der geschätzten mittleren Wartezeit für die gegebene Plattform mit einem ersten vorab festgelegten Schwellenwert und einem zweiten vorbestimmten Schwellenwert, und wenn die geschätzte mittlere Wartezeit für die gegebene Plattform unter dem ersten vorbestimmten Schwellenwert oder über dem zweiten vorbestimmten Schwellenwert liegt, Befehl zur Änderung (78) eines Betriebsparameters des Transportnetzes aus einer Verkehrsfrequenz oder einer Kapazität des Transportnetzes, das die Plattform bedient, wobei das Verfahren zum Schätzen mindestens eines Indikators, der den Betrieb des Netzes charakterisiert, umfasst:

   - einen vorherigen Schritt (30) zum Berechnen und Speichern, für jedes Stationspaar des Netzes, mindestens eines ausgewählten Weges zwischen den beiden Stationen des Stationspaares, in Abhängigkeit von statischen Daten (32), die das Transportnetz charakterisieren; und die Schritte:

   - Erhalten (36), aus Eingabe-/Ausgabedaten, die von dem System des Personentransportnetzes aufgezeichnet wurden, von Eingabe-/Ausgabedaten von tatsächlichen Fahrten, die tatsächlichen Fahrten in dem Netz während eines Beobachtungszeitraums entsprechen, umfassend eine Eingangsstation und ein zugehöriges Eingangsdatum und eine zugehörige Eingangszeit sowie eine Ausgangsstation und ein zugehöriges Ausgangsdatum und eine zugehörige Ausgangszeit;
   - für jedes Eingabe-/Ausgabedatum, Berechnen (52) einer effektiven Fahrzeit und Auswählen (58) einer Fahrt zwischen Eingabestation und Ausgabestation aus den Fahrten, die in Verbindung mit dem Stationspaar ausgewählt werden, das durch die Eingabestation und die Ausgabestation gebildet wird;
   - Berechnung (40) mindestens eines Indikators, der die Funktionsweise des Netzes charakterisiert, umfassend die Berechnung einer durchschnittlichen Wartezeit für jede Plattform des Netzes während einer oder mehrerer elementarer Zeitperioden durch Umsetzung eines iterativen Algorithmus, der bei jeder Iteration Folgendes implementiert:

      - für jedes Eingabe-/Ausgabedatum eine Berechnung (60) einer zeitlichen Differenz zwischen einer geschätzten Dauer der ausgewählten Fahrt und der tatsächlichen Dauer der Fahrt;
      - wenn die ausgewählte Fahrt mindestens einen Anschluss über eine Be-/Entladeplattform umfasst, Zuweisen (60) eines Bruchteils der Zeitdifferenz zu jeder Wartezeit, die mit einer Anschlussplattform verbunden ist,
      - eine Aktualisierung (62) der Wartezeit pro elementarer Zeitperiode für jede Plattform im Netz,

   wobei das Verfahren zum Schätzen mindestens eines Indikators, der den Betrieb des Netzes charakterisiert, außerdem in jeder Iteration für jedes tatsächliche Eingangs-/Ausgangs-Fahrdatenelement eine Berechnung (56) der geschätzten Fahrzeit für jede ausgewählte Fahrt umfasst, die dem Stationspaar zugeordnet ist, das durch die Eingangsstation und die Ausgangsstation in Abhängigkeit von den aktualisierten Wartezeiten und den statischen Daten gebildet wird, die das Transportnetz charakterisieren, und eine Neuauswahl (58) unter den ausgewählten Fahrten der Fahrt mit der geschätzten Fahrtzeit, die der tatsächlichen Fahrtzeit am nächsten kommt.

2. Verfahren nach Anspruch 1, wobei der Bruchteil der Zeitdifferenz von einem Gewichtungsfaktor abhängt, der mit jeder Be-/Entladeplattform verbunden ist.

3. Verfahren nach einem der Ansprüche 1 oder 2, bei dem der vorherige Schritt (30), bei dem für jedes Stationspaar des Netzes mindestens ein ausgewählter Weg zwischen den beiden Stationen des Stationspaars berechnet wird, einen Algorithmus zur Suche nach dem kürzesten Weg in einem Graphen implementiert.

4. Verfahren nach einem der Ansprüche 1 bis 3, wobei die statischen Daten, die das Transportnetz charakterisieren, die Gesamtheit der Stationen des Netzes, die Gesamtheit der Plattformen, die Gesamtheit der Linien sowie die Betriebszeiten und die durchschnittlichen Fahrtzeiten bei Abwesenheit von Zwischenfällen umfassen.

5. Verfahren nach einem der Ansprüche 1 bis 4, wobei die durchschnittliche Wartezeit für jede Plattform des Netzes während einer oder mehrerer elementarer Zeitperioden ein erster Indikator zur Kennzeichnung des Transportnetzes ist, und wobei der Berechnungsschritt (40) die Berechnung mindestens eines zweiten Indikators umfasst, der den Betrieb des Transportnetzes charakterisiert, und zwar unter einer durchschnittlichen Auslastung in Anzahl der wartenden Fahrgäste auf einer Plattform des Netzes während einer oder mehrerer elementarer Zeitperioden; einer durchschnittlichen Auslastung in Anzahl der Fahrgäste, die während einer oder mehrerer elementarer Zeitperioden ein Transportfahrzeug benutzen; eine Rate der effektiven Auswahl von Fahrten aus den in der vorherigen Stufe ausgewählten Fahrten.

6. Personentransportnetz mit einer Reihe von Stationen, wobei jede Station mindestens eine Plattform zum Be- und/oder Entladen von Passagieren in ein Transportfahrzeug des Netzes umfasst, wobei das Netz mit einem System ausgestattet ist, das in Verbindung mit einer Kennung Ein-/Ausgangsdaten des Netzes aufzeichnet, wobei die Ein-/Ausgangsdaten aus einer Eingangsstation und einem zugehörigen Eingangsdatum und einer zugehörigen Eingangszeit sowie einer Ausgangsstation und einem zugehörigen Ausgangsdatum und einer zugehörigen Ausgangszeit bestehen, wobei das System automatische Portale umfasst, die mit Sensoren ausgestattet sind, die geeignet sind, Daten von einer Karte zu lesen, die einem Benutzer den Zugang zum Netz ermöglicht und eine zugehörige eindeutige Kennung hat, **dadurch gekennzeichnet dass** es eine Vorrichtung zur Schätzung mindestens eines Indikators umfasst, der die Funktionsweise des genannten Netzes charakterisiert, wobei der Indikator, der die Funktionsweise des genannten Netzes charakterisiert, eine geschätzte durchschnittliche Wartezeit pro Plattform des Netzes ist,

und ein Modul (29), das so beschaffen ist, dass es für jede elementare Zeitperiode, in der die geschätzte durchschnittliche Wartezeit für eine gegebene Plattform unter einem ersten vorbestimmten Schwellenwert oder über einem zweiten vorbestimmten Schwellenwert liegt, eine Änderung eines Betriebsparameters des Transportnetzes, aus einer Verkehrsfrequenz oder einer Ladekapazität der Transportfahrzeuge, die die Plattform bedienen, veranlasst,

wobei die Vorrichtung zum Schätzen mindestens eines Indikators, der den Betrieb des Personentransportnetzes charakterisiert, eine programmierbare Vorrichtung ist, die einen Prozessor umfasst, der so konfiguriert ist, dass Folgendes implementiert wird:

    - ein Modul zur Berechnung und Aufzeichnung, für jedes Stationspaar des Netzes, von mindestens einem ausgewählten Weg zwischen den beiden Stationen des Stationspaares, in Abhängigkeit von statischen Daten (32), die das Transportnetz charakterisieren;

und:

    - ein Modul zur Gewinnung von Eingabe-/Ausgabedaten von tatsächlichen Fahrten in dem Netz während eines Beobachtungszeitraums, aus Eingabe-/Ausgabedaten, die von dem System des Personentransportnetzes aufgezeichnet wurden, umfassend eine Eingangsstation und ein zugehöriges Eingangsdatum und eine zugehörende Eingangszeit sowie eine Ausgangsstation und ein zugehöriges Ausgangsdatum und eine zugehörende Ausgangszeit;
    - ein Rechenmodul, das zu Folgendem angepasst ist:

        - für jedes Eingabe-/Ausgabedatum eine effektive Fahrzeit zu berechnen und eine Fahrt zwischen Eingabestation und Ausgabestation aus den Fahrten auszuwählen, die in Verbindung mit dem Stationspaar ausgewählt werden, das durch die Eingabestation und die Ausgabestation gebildet wird;
        - Berechnen mindestens eines Indikators, der die Funktionsweise des Netzes charakterisiert, umfassend die Berechnung einer durchschnittlichen Wartezeit für jede Plattform des Netzes während einer oder mehrerer elementarer Zeitperioden durch Umsetzung eines iterativen Algorithmus, der bei jeder Iteration Folgendes vornimmt:

- für jedes Eingabe-/Ausgabedatum eine Berechnung einer zeitlichen Differenz zwischen einer geschätzten Dauer der ausgewählten Fahrt und der tatsächlichen Dauer der Fahrt;
- wenn die ausgewählte Fahrt mindestens einen Anschluss über eine Be-/Entladeplattform umfasst, eine Zuweisung eines Bruchteils der genannten Zeitdifferenz zu jeder Wartezeit, die mit einer Anschlussplattform verbunden ist,

- eine Aktualisierung der Wartezeit pro elementarer Zeitperiode für jede Plattform im Netz,
- Berechnen, bei jeder Iteration, für jeden tatsächlichen Fahrt-Eingabe/Ausgabe-Datenwert, einer geschätzten Fahrtzeit für jede ausgewählte Fahrt, die dem Stationspaar zugeordnet ist, das durch die Eingangsstation und die Ausgangsstation gebildet wird, in Abhängigkeit von den aktualisierten Wartezeiten und den statischen Daten, die das Verkehrsnetz charakterisieren, und erneute Auswahl einer Strecke mit der geschätzten Fahrzeit, die der tatsächlichen Fahrzeit am nächsten kommt, aus den ausgewählten Strecken.

**7.** Computerprogramm, umfassend Softwareanweisungen, die, wenn sie von einer programmierbaren Vorrichtung implementiert werden, ein Verarbeitungsverfahren mindestens eines Funktionsparameters eines Personentransportnetzes nach einem der Ansprüche 1 bis 5 implementieren.

**8.** Informationsaufzeichnungsmedium, **dadurch gekennzeichnet, dass** es SoftwareAnweisungen zur Ausführung eines Verfahrens zur Änderung mindestens eines Betriebsparameters eines Personentransportnetzes gemäß den Ansprüchen 1 bis 5 enthält, wenn diese Anweisungen von einer programmierbaren Vorrichtung ausgeführt werden.

**Claims**

**1.** - A method for modifying at least one operating parameter of a passenger transport network, the network comprising a set of stations, each station comprising at least one platform for loading and/or unloading passengers in a transport vehicle of the network, the network being equipped with a system for recording, in association with an identifier, entry/exit data of the network, an entry/exit data consisting of an entry station and an associated entry date and time, and an exit station and an associated exit date and time, the system comprising automatic gantries equipped with sensors adapted to read data from a card allowing a user to access the network and having an associated unique identifier, the modification method being implemented by a programmable device, and **characterised in that** it comprises a first step of implementing a method of estimating at least one indicator characterising the operation of said network, the indicator characterising the operation of said network being an estimated average waiting time per platform of the network, the modification method further comprising the following steps:

for each elementary time period and for each platform of the network, comparison of the average waiting time estimated for the given platform with a first predetermined threshold and with a second predetermined threshold, and when the average waiting time estimated for the said given platform is less than the first predetermined threshold or greater than the second predetermined threshold, a command (78) to modify an operating parameter of the transport network from among a traffic frequency or a load capacity of the transport vehicles serving the said platform, the method of estimating at least one indicator characterising the operation of the said network comprising:

- a preliminary step (30) of calculating and recording, for each pair of stations in the network, at least one selected path between the two stations in the pair of stations, as a function of static data (32) characterising said transport network; and steps of:

- obtaining (36), from input/output data recorded by said passenger network system, input/output data of actual journeys corresponding to actual journeys in the network during an observation period, comprising an entry station and an associated entry date and time, and an exit station and an associated exit date and time;
- for each input/output data item, calculation (52) of an actual journey time and selection (58) of a journey between an input station and an output station from among the journeys chosen in association with the pair of stations formed by said input station and said output station;
- a calculation (40) of at least one indicator characterising the operation of the network, comprising the calculation of an average waiting time for each platform of the network during one or more elementary time periods by implementing an iterative algorithm implementing, at each iteration:

- for each input/output data item, a calculation (60) of a time difference between an estimated duration of the selected journey and the actual duration of the journey;
- when the selected journey includes at least one connection via a loading/unloading platform, allocation (60) of a fraction of said time difference to each waiting time associated with a connection platform,
- an update (62) of the waiting time per elementary time period for each platform in the network,

the method of estimating at least one indicator characterising the operation of said network further comprising, at each iteration, for each actual path input/output data item, a calculation (56) of the estimated path duration for each chosen path associated with the pair of stations formed by said input station and said output station as a function of said updated waiting times and of the static data characterising said transport network, and a re-selection (58), from among said chosen paths, of the path having the estimated path duration closest to the actual path duration.

2.  - A method according to claim 1, in which the said fraction of the time difference is a function of a weighting coefficient associated with each loading/unloading platform.

3.  - A method according to any one of claims 1 or 2, in which the prior step (30) of calculating, for each pair of stations of the network, at least one path chosen between the two stations of the pair of stations, implements an algorithm for searching for the shortest path in a graph.

4.  - A method according to any one of claims 1 to 3, in which the said static data characterising the said transport network comprises all the stations in the network, all the platforms, all the lines, as well as the operating times and average journey times in the absence of an incident.

5.  - A method according to any one of claims 1 to 4, in which the average waiting time for each platform of the network during one or more elementary time periods is a first indicator characterising the transport network, and in which the calculation step (40) comprises the calculation of at least one second indicator characterising the operation of the transport network from among: an average load in terms of the number of passengers waiting on a network platform during one or more elementary time periods; an average load, in terms of the number of passengers, per transport vehicle during one or more elementary time periods; a rate of effective selection of routes from among the routes chosen in the previous step.

6.  - Passenger transport network comprising a set of stations, each station comprising at least one platform for loading and/or unloading passengers in a transport vehicle of the network, the network being equipped with a system for recording, in association with an identifier, entry/exit data from the network, an entry/exit data consisting of an entry station and an associated entry date and time, and an exit station and an associated exit date and time, the system comprising automatic gantries equipped with sensors adapted to read data from a card enabling a user to access the network and having an associated unique identifier, **characterised in that** it includes a device for estimating at least one indicator characterising the operation of the said network, the indicator characterising the operation of the said network being an estimated average waiting time per platform of the network,

and a module (29) adapted to control, for each elementary time period for which the estimated average waiting time for a given platform is less than a first predetermined threshold or greater than a second predetermined threshold, a modification of an operating parameter of the transport network from among a traffic frequency or a load capacity of the transport vehicles serving said platform,
the device for estimating at least one indicator characterising the operation of said passenger transport network, being a programmable device comprising a processor configured to implement:

- a module for calculating and recording, for each pair of stations in the network, at least one selected path between the two stations in the pair of stations, as a function of static data (32) characterising said transport network;

and:

- a module for obtaining, from input/output data recorded by said passenger transport network system, input/output data of actual journeys corresponding to actual journeys in the network during an observation period, comprising an entry station and an associated entry date and time, and an exit station and an

14

associated exit date and time;
- a calculation module adapted to:

   - for each input/output data item, calculate an actual journey time and selecting a journey between an input station and an output station from among the journeys chosen in association with the pair of stations formed by said input station and said output station;
   - calculate at least one indicator characterising the operation of the network, comprising the calculation of an average waiting time for each platform of the network during one or more elementary time periods by implementing an iterative algorithm implementing, at each iteration:

      - for each input/output data item, a calculation of a time difference between an estimated duration of the selected journey and the actual duration of the journey;
      - when the selected journey includes at least one connection via a loading/unloading platform, allocation of a fraction of said time difference to each waiting time associated with a connection platform,

   - an update of the waiting time per elementary time period for each platform in the network,
   - calculate, at each iteration, for each actual journey input/output data item, an estimated journey duration for each chosen journey associated with the pair of stations formed by said input station and said output station according to said updated waiting times and static data characterising said transport network, and re-selecting, from among said chosen paths, a path having the estimated path duration closest to the actual path duration.

7.  - A computer program comprising software instructions which, when implemented by a 35 programmable device, implement a method of modifying at least one operating parameter of a passenger transport network in accordance with claims 1 to 5.

8.  - Information recording medium, **characterised in that** it comprises software instructions for executing a method of modifying at least one operating parameter of a passenger transport network in accordance with claims 1 to 5, when these instructions are executed by a programmable device.

Fig.1

Fig.2

Fig.3

Fig.4

*Fig.5*